# EUROPEAN PATENT SPECIFICATION

(11) **EP 1 463 321 B1**
(45) Date of publication and mention of the grant of the patent: **28.08.2013**
(21) Application number: 03300108.2
(22) Date of filing: 04.09.2003
(51) Int. Cl.: H04N 21/472, H04N 5/445

(54) **Non-modal navigation of interactive multimedia content**
Nicht modifizierende Nnavigation für interaktiven Multimediainhalt
Navigation non-modale d'un contenu multimédia interactif

(30) Priority: 05.09.2002 US 235281
(43) Date of publication of application: 29.09.2004
(73) Proprietor: Alcatel Lucent, 75007 Paris (FR)
(72) Inventor: Beaton, Robert J., Apohaqui New Brunswick E5P 3G2 (CA); Dadzikowska, Milena, Edmonton Alberta T6G 2L8 (CA); Hetherington, Robert Gary, Rothesay New Brunswick E2E 1W6 (CA); Palmer, Samuel John Allan McDougall, Saint John New Brunswick E2L 4R8 (CA); Stuart, Anthony Moyle Lenwood, Saint John New Brunswick E2L 1G1 (CA); Clowater, Gerald Allan, Saint John New Brunswick E2J 4J5 (CA)
(74) Representative: Sciaux, Edmond

(56) References cited:
- EP-A2- 1 113 442
- WO-A-00/05886
- WO-A-01/74063
- US-A1- 2002 067 431
- US-B1- 6 501 514
- PATENT ABSTRACTS OF JAPAN vol. 2002, no. 11, 6 November 2002 (2002-11-06) & JP 2002 190992 A (SONY CORP OF AMERICA), 5 July 2002 (2002-07-05) & US 6 690 391 B1 (HASEGAWA YUTAKA ET AL) 10 February 2004 (2004-02-10)

## Description

The present invention relates to devices and methods for accessing multimedia content. More specifically, the present invention is particularly applicable but not limited to devices and methods for navigating locations containing multimedia content.

The explosion in interest in and use of the Internet has led to the adoption of Internet access to varied devices. Internet access can now be had from mobile phones, personal digital assistants and, of course, computers. Another realm in which Internet access has made inroads is the now ubiquitous television. With the advent of Internet access through set top boxes (STBs) and through high speed cable modems, television owners can now get on the Internet without the need for a dedicated computer. However, this advantage may be vitiated by the confusion that may result for the end user using the system. Since Internet access, and any other extra digital interactive services provided by way of the STB, are provided in addition to the regular TV services, different methods are provided by different manufacturers for navigating between the different services. Currently, an end user using the Internet through an STB will need to toggle between the Internet functions and the TV functions if he wishes to switch between the two.

Not only that, but such an end user, when he toggles between the two functions, will lose any information/location that was used or stored for the Internet location or TV service he was accessing.

Based on the above, using today's STBs and other devices which integrate multiple multimedia functions and services can be onerous and difficult. It may involve an extended learning period when the user has to figure out how to properly switch between the main functions of the multimedia access device (e.g. switching between the TV and the Internet functions for an STB). A further learning period may be required for the user to learn how to properly navigate the different options available for each function. The different interactivity options available for each TV station/multimedia service/Internet website can be daunting to a novice user.

WO 01/74063 discloses a single integrated user interface (300) for user-friendly access to both broadcast television (Fig. 20) and Internet content. One embodiment of the user interface comprises a "L" configuration of controls (302, 304). Primary controls (302) are provided along a first direction of the "L", and context-sensitive controls (304) are provided along a second direction of the "L". The context-sensitive controls (304) that are provided depend on the content being displayed (301). A first pair of arrows (1180, 1110) on a remote control (1100) navigates among the primary controls (302), and a second pair of arrows (1104, 1106) (perpendicular to the first pair) navigates among the context-sensitive controls (304). Switching between navigation among the primary controls and navigation among the context-sensitive controls occurs automatically upon switching between using the first pair of arrows (110, 1110) and using the second pair of arrows (1104, 1106). Advantageously, the user interface automatically adjusts itself by providing different context-sensitive controls depending on the type of multimedia content in the display area (301).

One object of the present invention is to provide a control device for use with an end user device for accessing interactive content representing an alternative to the existing systems and to, at the very least, mitigate if not overcome the disadvantages of the prior art, allowing a simpler navigation system for use with multimedia access devices such as STBs. Such a solution should ideally be easy to use, easy to learn, and provides the end user with the options he or she may want. It should be noted that through this document, the term "locations" will be used to refer to Internet websites, television channels, interactive television channels, enhanced television services, and other multimedia enhanced channels or sites which may be accessible to an end user by way of a set-top box, a computer or any other device which may be used to retrieve multimedia content or services.

More precisely, the present invention provides a control device for use with an end user device for accessing interactive content, the control device comprising:
- a navigation control element for activating a navigation menu through said end user device, the navigation menu listing locations with interactive content available to said end user device;
- an execution control element for activating an execution menu through said end user device, the execution menu listing actions available to an end user using said end user device, said actions being available to a specific location currently being accessed by said end user,
wherein the control device controls the end user device.

Thus, the present invention relates to a device for navigating locations containing multimedia content. Said control device for multimedia access apparatus is equipped with user activatable controls. A dedicated navigation control button, when activated by an end user of the apparatus, presents a navigation menu of possible locations which may be accessed by the end user. These locations are presented to the end user regardless of the mode or service (e.g. TV, Video on Demand, Pay Per View, or the Internet) in which the multimedia access apparatus is operating. The end user can then choose a destination from the navigation menu and the apparatus accesses the location selected by the end user, again regardless of the mode required for the selected location. A dedicated execution control button, when activated, presents an execution menu of possible actions or functions which may be activated by the end user for the particular location currently being accessed. If the end user selects an action or function from the menu, the selection action/function is activated for the location currently being accessed by the end user.

In a second aspect the present invention provides a method for allowing an end user to navigate content from different multimedia content providers using an end user device which allows said end user to access said content, the method comprising:
a) providing a menu to said end user, said menu chosen from a group comprising:
   - a navigation means listing a plurality of possible multimedia content locations which can be accessed by said end user;
   - an execution means listing at least one possible action which may be executed
   - by the end user, the or each of said at least one possible action being applicable to a current multimedia content location being accessed by said end user;.
b) receiving a specific command from said end user;
c) in the event said specific command activates a multimedia content location listed in said navigation menu, accessing multimedia content for said location;
d) in the event said specific command activates an action listed in said execution menu, executing said action for said current location,
wherein said navigation menu and said execution menu are visible to said end user only when individually activated.

A better understanding of the invention will be obtained by considering the detailed description below, with reference to the following drawings in which:
Figure 1 illustrates a remote control device implementing one embodiment of the invention;
Figure 2 is a block diagram of a navigation menu as implemented by an embodiment of the invention;
Figure 3 and 4 are block diagrams of the navigation menu of Figure 2 including examples of submenus and the available choices through the submenus;
Figure 5 is a block diagram of a sample execution menu as implemented for a television channel;
Figure 6 is a block diagram of another sample execution menu as implemented for a website;
Figure 7 is a flow chart illustrating the steps executed for the main software component according to an embodiment of the invention;
Figure 8 is a flow chart illustrating a sample logic for a navigation subroutine; and
Figure 9 is a flow chart illustrating a sample logic for a execution subroutine.

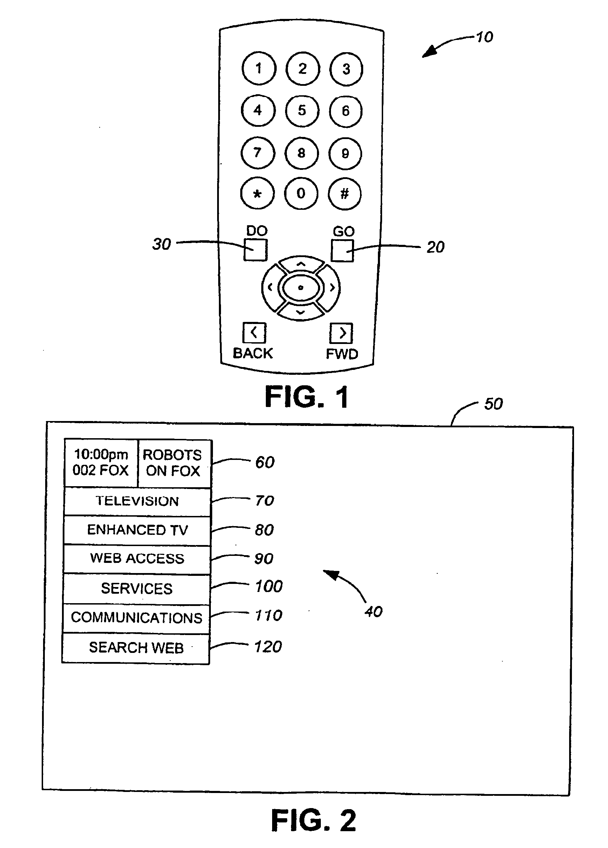

Referring to Figure 1, a remote control device 10, for use with a multimedia access device (such as a set top box) is illustrated. As can be seen, the device 10 has a navigation control element 20 (a button labelled Go) and an execution control element 30 (a button labelled DO). The device 10 also has the regular control buttons normally associated with remote control devices.

The navigation control 20, when activated, presents an end user with a navigation menu 40, illustrated as being in a comer of a television screen (or display) 50, may have an identification field 60 that notes the time, the channel being viewed, the television network, and the program currently showing. The navigation menu 40 also presents the different locations which may be accessed by the end user. To simplify the interface used, the navigation menu 40 may group locations according to their character - regular television channels are grouped under the television category 70 while enhanced TV category 80. For web access, a web access category 90 is provided while digital television services may be found in the services category 100. A communications category 110 is provided for email and other communications functions while web or Internet searching is found under the search web category 120. Selection or activation of any one of the categories in the menu will present a further menu detailing locations available to the end user for the category.

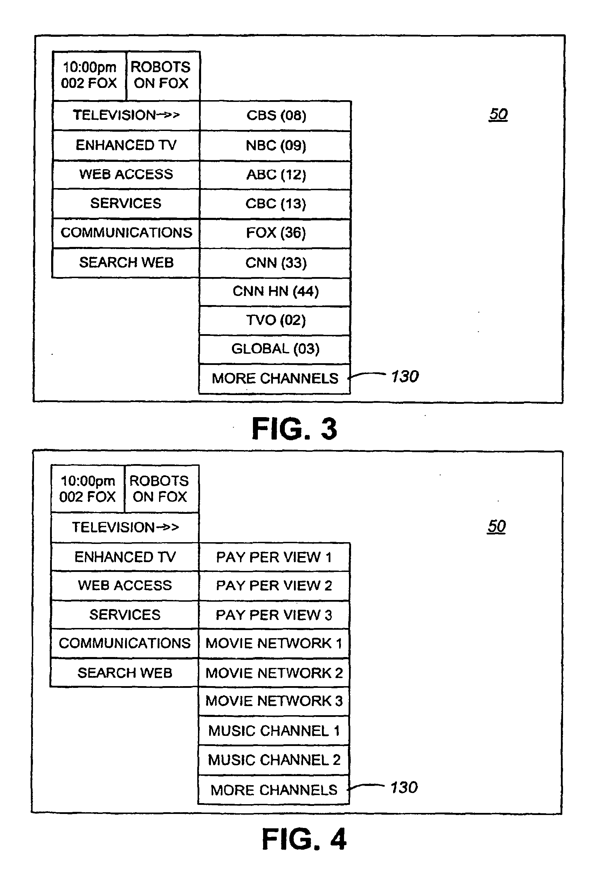

Referring to Figure 3, a television submenu, activated when the end user selects the television category 70, lists the television channels available to the end user. Should the television submenu be too small an area to display all the available channels, a scrolling selection 130 is provided. When selected by the end user, the scrolling selection 130 will cause the submenu to scroll, thereby providing the end user with more options. Of course, if the end user selects one of the television channels provided, the multimedia access device will change modes (if required) and change the television channel being viewed to that selected by the end user. This is done regardless of what the end user was viewing/accessing at the time the selection was made.

Referring to Figure 4, the different possible selections for each category in the navigation menu are illustrated. As can be seen in Figure 4, the enhanced TV category includes pay per-view selections, different dedicated movie network selections and dedicated digital music channels.

Again, selection of any of these selections automatically causes the multimedia access device to access that selected channel.

The options available for each category in the main navigation menu may be as follows:
Services Category
   - Internet banking services accessed through an integrated and dedicated web portal;
   - online games available to the end user and playable through the multimedia access device;
   - ordering of pay per-view movies or of other types of video on demand;
   - activation of an online and up to date television guide; and
   - management of the end user's account with the enhanced television/Internet service provider.
Communications Category
   - email using a dedicated email program through an email portal; and
   - online chatting using a dedicated online chatting software.
Web Search Category
   - different search engines which may be used to search the World Wide Web for information
Web Access Category
   - web access using a version of a web browser compatible with the operating system software used by the multimedia access device.

Other options which may be inserted in the navigation menu or in one of its submenus may be any one of the following:
- television channels (cable, satellite or network channels);
- Internet options such as specific websites;
- grid guide to television and other types of programming;
- parental control settings;
- search tools for searching the Internet or a available television programming for specific content;
- Pay-Per-View options including ordering and/or viewing options;
- electronic mail functions;
- Video on Demand functions including ordering and/or viewing options;
- news and/or weather tracker functions; and
- call display functions when the device is hooked up to telephony connections.

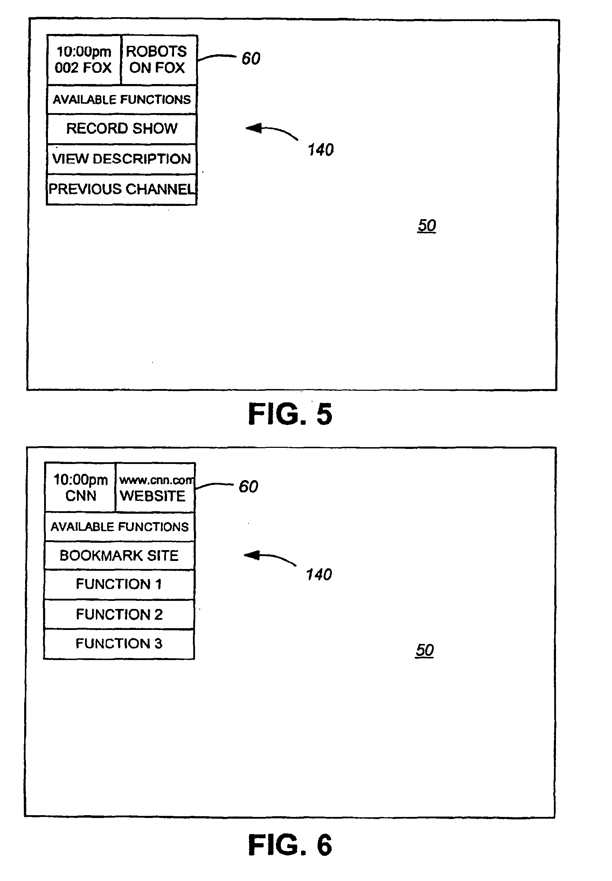

For the execution control button 30, its activation presents the end user with an execution menu 140 (see Figure 5). The execution menu 140, similar to the navigation menu 40, has an identification field 60 that notes the time, the channel/location currently being viewed, the television network, and the program currently showing. The execution menu also lists the available functions/actions for the location currently being accessed. As an example, Figure 5 illustrates the options available for a regular television show being viewed. The options may be:
a) to record the show (perhaps to record from the multimedia access device to an internal, network based hard drive or video cassette recorder)
b) view a description of the show currently being viewed; and
c) change the channel being viewed to the most recently viewed previous channel.

As noted above, the only functions/actions listed in the execution menu are those available for the location currently being viewed. As such, the example in Figure 6 is for a location located in the Internet. The identification field 60 therefore identifies the website being accessed (WEBSITE), the time and, if possible, the source of the content (CNN). Similarly, the options in the execution menu 140 relate only to websites and not to, as an example, television channels. One of the available functions in the execution menu 140 is therefore the ability to bookmark the location or website currently being viewed.

To implement the above system, a software component which works closely with the operating system may be used. Such a software component would overlay on top of all of the services provided to the end user and would group them into the categories as explained above.

The software component would receive all the input from the end user and determine whether the input is from either of the execution or the navigation controls. If the input is from the execution control (the "DO" button in Figure 1), then an execution menu specific to the location being accessed is retrieved and presented to the end user. This specific execution menu is sorted specifically for the current location and contains only the options available for that location. Each execution menu may therefore be constructed or created specifically for each location.

Alternatively, locations may be categorized into specific types of services with each type of service being provided with a set execution menu. As an example, the execution menu options in Figure 5 may be the options provided for all television channels. Enhanced TV channels may then user the same menu set with perhaps some added functions specific to enhanced TV channels. Similarly, websites may have an execution menu option as set out in Figure 6.

If, on the other hand, the input received by the software component is from the navigation control, then a navigation menu is presented to the end user. This navigation menu is the same for all locations in that regardless of the location being accessed, the same navigation menu is presented. As noted above, this navigation menu, illustrated as having categorized submenus, lists the available locations to the end user.

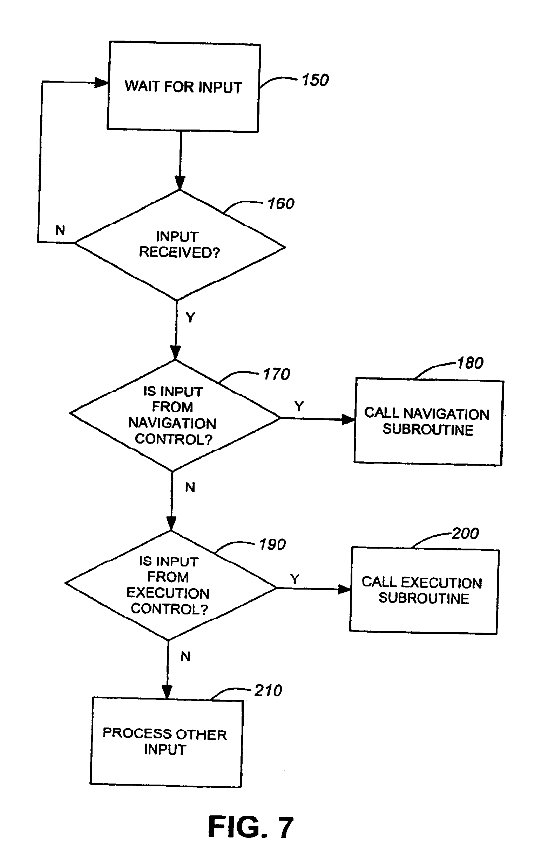

To further explain the logic implemented by the software component, Figure 7 presents a flow chart detailing the logic followed by the software component. Referring to Figure 7, the process begins with the software component waiting for input (step 150) from the end user by way of the control device. If an input is received, step 160 verifies that there is indeed an input. If it is a false alarm, the component returns to waiting for an input (step 150). If an input is present, decision 170 determines if the input is from the navigation control. In the event the input is from the navigation control, a navigation subroutine is called (step 180) and the logic flows to this navigation subroutine. This navigation subroutine is explained further below. On the other hand, if the input is not from the navigation control, step 190 decides if the input is from the execution control. If the input is from the execution control, then an execution subroutine specific to the location being accessed or, alternatively, a generic execution subroutine specific to the category to which the present location belongs, is called (step 200). The execution subroutine will be explained further below. If the input is neither from the navigation control nor from the execution control, the other processing steps (step 210) which are beyond the scope of this document, are executed.

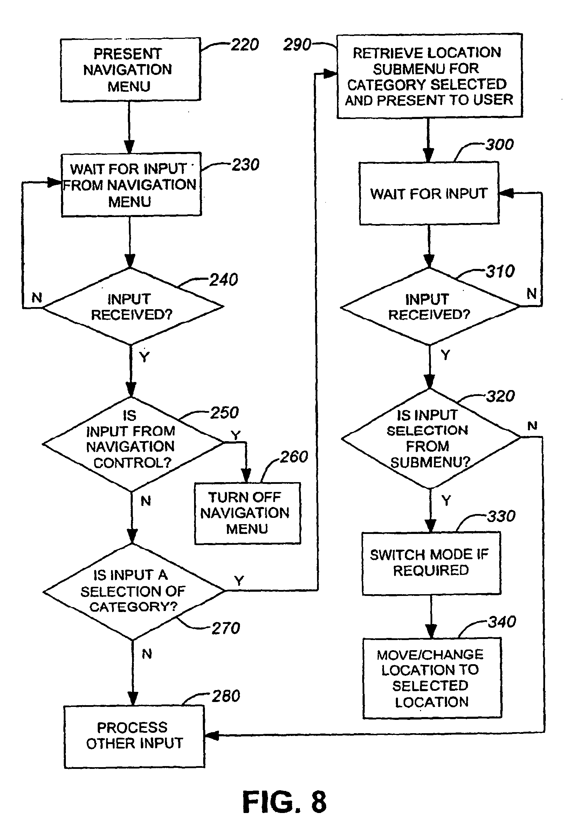

Referring to Figure 8, a flowchart detailing the steps for a sample navigation subroutine is illustrated. The process begins by presenting the end user with the navigation menu (step 220).

As noted above, the navigation menu is the same regardless of the location being accessed. The next step, step 230, is of waiting for input from the end user. Decision 240 then verifies if input has been received. If not, then the loop between step 230 and decision 240 is carried out until input is received.

Once input is received, decision 250 determines if the input is from the navigation control. If the input is from the navigation control, then the navigation menu is turned off (step 260). It should be noted that, for this embodiment of the invention, pressing either the navigation or the execution button toggles their associated menus as being active or inactive. If the input is not from the navigation control, then decision 270 determines if the input is a selection of a category from the navigation menu. If the input is not from the navigation menu, then the input is processed in a different manner (step 280). Conversely, if the input received is a selection of a category from the navigation menu, then step 290 retrieves the submenu for the category selected as input by the end user. Step 290 also presents the retrieved submenu to the end user. Steps 300 and 310 constitute another loop to ensure that input has been received. Step 320 determines if the input is a selection from the location submenu. If it is not, then input is processed in a different manner (step 280). However, if the input is from the submenu, then step 330 is that of switching the mode of the multimedia access device if required. This step may be necessary especially if the new selected location is only accessible through a mode change. As an example, if the current location being accessed is a television station and the user wants to use email, then a mode switch from TV viewing mode to a more interactive quasi-Internet mode is required. The final step is to actually change the location being accessed (step 340).

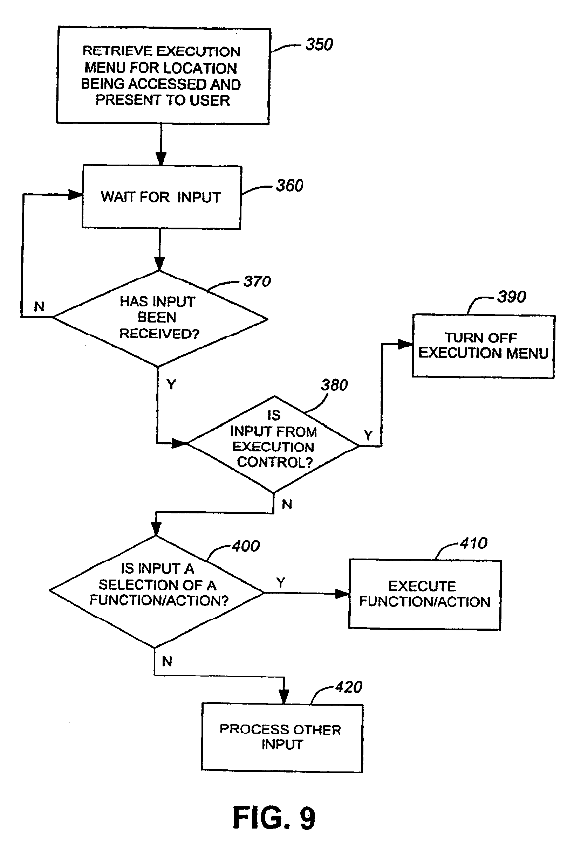

Referring to Figure 9, a flowchart detailing the possible steps in an execution subroutine is illustrated. As with the navigation subroutine, for this embodiment the activation/deactivation of the execution menu is done by toggling the execution control. Furthermore, the steps in the flowchart of Figure 9 may be used for most types of execution menus regardless of the contents of the execution means.

The process in Figure 9 begins with step 350 - that of retrieving the execution menu for the location being accessed and presenting it to the end user. As noted above, the execution menu may be one customized for a particular location or it may be one customized for a particular category of locations. Once the execution menu has been retrieved and presented, the loop consisting of steps 360 and 370 wait and verify the input received. Once input has been received, step 380 verifies that the input is from the execution control. If the input is from the execution control, then the execution menu is turned off (step 390).

However, if the input is not from the execution control, then step 400 checks if the input is one of the available options in the execution menu of possible functions/actions. If the input is an available function/action, then the selected function/action is executed (step 410), possibly by calling another subroutine. If the input is not one of the a vailable options in the execution menu, then the input is processed by other means (step 420).

It should be noted that the above description is of a preferred embodiment and must not be taken as the only possible implementation. Other implementations where the multimedia access device may be a set top box, a computer, a video/Internet terminal, or other device are possible. The invention may be practiced on any device which normally requires complex menus but which can be simplified by having two "top-level" menus. Furthermore, the execution and navigation controls may be implemented on any control device which controls such a multimedia access device. The control device may a keyboard, a conventional wireless or infrared remote control, or any other device which can implement two dedicated controls for execution and navigation. The execution and navigation controls may therefore be implemented on a touch screen, remote control button, or on any user activatable control medium on a control device.

It should further be noted that while the above description refers to the use of submenus from a "top level" or parent menu, it is also possible to have a simple menu for each of the navigation or the execution menus. Thus, for the navigation menu, a single menu could include all the contents of the various submenus detailed above. Clearly, a scrolling function or some other means of navigating the potentially large navigation menu may be required.

Embodiments of the invention may be implemented in any conventional computer programming language. For example, preferred embodiments may be implemented in a procedural programming language (e.g. "C") or an object oriented language (e.g. "C++"). Alternative embodiments of the invention may be implemented as pre-programmed hardware elements, other related components, or as a combination of hardware and software components.

Embodiments can be implemented as a computer program product for use with a computer system. Such implementation may include a series of computer instructions fixed either on a tangible medium, such as a computer readable medium (*e.g.*, a diskette, CD-ROM, ROM, or fixed disk) or transmittable to a computer system, via a modem or other interface device, such as a communications adapter connected to a network over a medium. The medium may be either a tangible medium (*e.g*., optical or electrical communications lines) or a medium implemented with wireless techniques (*e.g*., microwave, infrared or other transmission techniques). The series of computer instructions embodies all or part of the functionality previously described herein. Those skilled in the art should appreciate that such computer instructions can be written in a number of programming languages for use with many computer or electronic system architectures or operating systems. Furthermore, such instructions may be stored in any memory device, such as semiconductor, magnetic, optical or other memory devices, and may be transmitted using any communications technology, such as optical, infrared, microwave, or other transmission technologies. It is expected that such a computer program product may be distributed as a removable medium with accompanying printed or electronic documentation (*e.g.*, shrink wrapped software), preloaded with a computer system (*e.g.*, on system ROM or fixed disk), or distributed from a server over the network (*e.g.*, the Internet or World Wide Web). Of course, some embodiments of the invention may be implemented as a combination of both software (*e.g.* , a computer program product) and hardware. Still other embodiments of the invention may be implemented as entirely hardware, or entirely software (*e.g*., a computer program product).

Although various exemplary embodiments of the invention have been disclosed, it should be apparent to those skilled in the art that various changes and modifications can be made which will achieve some of the advantages of the invention without departing from the true scope of the claims.

The above invention may therefore be implemented in any device which uses a display and in which the end user may need to switch modes to navigate the various options or locations available to the device. Thus, the invention may be implemented on not only STBs but also on personal digital assistants, cellular telephones, personal computers, and other display equipped devices.

A person understanding this invention may now conceive of alternative structures and embodiments or variations of the above all of which are intended to fall within the scope of the invention as defined in the claims that follow.

## Claims

1. Control device (10) for enabling a user to control an end user device equipped with a display (50) with a view to accessing interactive multimedia content, the control device (10) comprising:
- a navigation control element (20) for activating a navigation menu (40) through said end user device, the navigation menu listing locations with interactive content available to said end user device;
- an execution control element (30) for activating an execution menu (140) through said end user device, the execution menu listing actions available to the user for a specific location currently being accessed by said user; and
- means for enabling said user to select said specific location from said navigation menu, and to select an action from said execution menu,
***characterized in that*** said execution control element (30) is dedicated for activating said execution menu (140) and distinct from said navigation control element (20), and **in that** said navigation menu (40) can be activated when said execution menu (140) is de-activated and vice-versa.

2. Control device according to claim 1 wherein said execution menu (140) is visible to the user only after said execution control element (30) is activated.

3. Control device according to claim 1 or claim 2 wherein said navigation menu (40) is visible to the user only after said navigation control element (20) is activated.

4. Control device according to any one of claims 1 to 3 wherein said end user device is a set top box.

5. Control device according to any one of claims 1 to 4 wherein said navigation menu (40) groups locations on submenus based on multimedia categories.

6. Control device according to claim 5 wherein said navigation menu (40) includes submenus for a television category (70), an enhanced television category (80), a web access category (90), a services category (100), a communications category (110) and a web category (120).

7. Control device according to any one of claims 1 to 6 wherein said navigation menu (40) and execution menu (140) provide an identification field (60) for identifying the specific location currently being accessed.

8. Control device according to any one of claims 1 to 7 wherein said navigation menu (40) and execution menu (140) are displayed at different times in a corner of said display (50), and concomitantly with the multimedia content available at said specific location.

9. A method of accessing interactive multimedia content from an end user device by means of a control device (10), said end user device being enabled to be operated according to a plurality of modes, comprising the steps of:
a) activating a navigation menu (40) using a navigation control element (20) provided on said control device, the navigation menu listing locations with interactive content available to said end user device;
b) upon selection of a first location, activating an execution menu (140) using an execution control element (30), the execution menu listing actions available to the user for said first location; and
c) selecting a specific action from said execution menu for enabling said user to access multimedia content available at said first location and perform said specific action on said multimedia content,
***characterized in that*** said execution control element (30) is dedicated for activating said execution menu (140) and distinct from said navigation control element (20).

10. Method according to claim 9, further comprising organizing the locations provided by said navigation menu into categories based on the mode of operations available at said end-user device.

11. Method according to claim 10, further comprising the step d) of skipping step a) in the event that said specific action refers to a further action available for a location category including said first location.

12. Method according to claim 10, further comprising the step e) of changing the mode of operation of said end user device from a first mode of operation corresponding to actions available on the multimedia content at said first location to a second mode of operation corresponding to a new location, whenever said new location is in a different category than said first location.

## Patentansprüche

1. Steuervorrichtung (10), die es einem Benutzer ermöglicht, eine Endbenutzervorrichtung, welche mit einem Display (50) mit einer Anzeige für den Zugriff auf interaktive Multimedia-Inhalte ausgestattet ist, zu steuern, wobei die Steuervorrichtung (10) umfasst:
- ein Element zur Navigationssteuerung (20) zum Aktivieren eines Navigationsmenüs (40) über die besagte Endbenutzervorrichtung, wobei das Navigationsmenü Positionen mit für die besagte Endbenutzervorrichtung verfügbaren interaktiven Inhalten auflistet;
- ein Element zur Ausführungssteuerung (30) zum Aktivieren eines Ausführungsmenüs (140) über die besagte Endbenutzervorrichtung, wobei das Ausführungsmenü für den Benutzer verfügbare Aktionen für eine spezifische Position, auf welche die besagte Endbenutzervorrichtung gegenwärtig zugreift, auflistet; und
- Mittel, welche es dem Benutzer ermöglichen, die besagte spezifische Position aus dem Navigationsmenü auszuwählen und eine Aktion aus dem besagten Ausführungsmenü auszuwählen,
**dadurch gekennzeichnet, dass** das besagte Element zur Ausführungssteuerung (30) für die Aktivierung des besagten Ausführungsmenüs (140) bestimmt und von dem besagten Element zur Navigationssteuerung (20) unterschiedlich ist, und dass das besagte Navigationsmenü (40) aktiviert werden kann, wenn das besagte Ausführungsmenü (140) deaktiviert ist, und umgekehrt.

2. Steuervorrichtung nach Anspruch 1, wobei das besagte Ausführungsmenü (140) erst nach Aktivierung des besagten Elements zur Ausführungssteuerung (30) für den Benutzer sichtbar ist.

3. Steuervorrichtung nach Anspruch 1 oder Anspruch 2, wobei das besagte Navigationsmenü (40) erst nach Aktivierung des besagten Elements zur Navigationssteuerung (20) für den Benutzer sichtbar ist.

4. Steuervorrichtung nach einem beliebigen der Ansprüche 1 bis 3, wobei die besagte Endbenutzervorrichtung eine Set-Top-Box ist.

5. Steuervorrichtung nach einem beliebigen der Ansprüche 1 bis 4, wobei das besagte Navigationsmenü (40) Positionen auf der Basis von Multimedia-Kategorien in Untermenüs gruppiert.

6. Steuervorrichtung nach Anspruch 5, wobei das besagte Navigationsmenü (40) Untermenüs für eine Fernsehkategorie (70), eine verbesserte Fernsehkategorie (80), eine Webzugangskategorie (90), eine Dienste-Kategorie (100), eine Kommunikations-Kategorie (110) und eine Web-Kategorie (120) umfasst.

7. Steuervorrichtung nach einem beliebigen der Ansprüche 1 bis 6, wobei das besagte Navigationsmenü (40) und das besagte Ausführungsmenü (140) ein Identifikationsfeld (60) zum Identifizieren der spezifischen Position, auf welche gegenwärtig zugegriffen wird, bereitstellen.

8. Steuervorrichtung nach einem beliebigen der Ansprüche 1 bis 7, wobei das besagte Navigationsmenü (40) und das besagte Ausführungsmenü (140) zu unterschiedlichen Zeiten in einer Ecke des Displays (50) und gleichzeitig mit dem an der besagten spezifischen Position verfügbaren Multimedia-Inhalt angezeigt werden.

9. Verfahren für den Zugriff auf interaktive Multimedia-Inhalte ab einer Endbenutzervorrichtung mittels einer Steuervorrichtung (10), wobei die besagte Endbenutzervorrichtung gemäß einer Vielzahl von Funktionsweisen betreibbar ist, die folgenden Schritte umfassend:
a) Aktivieren eines Navigationsmenüs (40) unter Verwendung eines auf der Steuervorrichtung bereitgestellten Elements zur Navigationssteuerung (20), wobei das Navigationsmenü Positionen mit für die besagte Endbenutzervorrichtung verfügbaren interaktiven Inhalten auflistet;
b) nach Auswahl einer ersten Position, Aktivieren eines Ausführungsmenüs (140) unter Verwendung eines Elements zur Ausführungssteuerung (30), wobei das Ausführungsmenü für den Benutzer verfügbare Aktionen für die besagte erste Position auflistet; und
c) Auswählen einer spezifischen Aktion aus dem besagten Ausführungsmenü, um es dem besagten Benutzer zu ermöglichen, auf einen an der besagten ersten Position verfügbaren Multimedia-Inhalt zuzugreifen und die besagte spezifische Aktion auf dem besagten Multimedia-Inhalt auszuführen,
**dadurch gekennzeichnet, dass** das besagte Element zur Ausführungssteuerung (30) für die Aktivierung des besagten Ausführungsmenüs (140) bestimmt und von dem besagten Element zur Navigationssteuerung (20) unterschiedlich ist.

10. Verfahren nach Anspruch 9, weiterhin umfassend das Organisieren der von dem besagten Navigationsmenü bereitgestellten Positionen in Kategorien auf der Basis des an der besagten Endbenutzervorrichtung verfügbaren Funktionsweisen.

11. Verfahren nach Anspruch 10, weiterhin umfassend den Schritt d) des Überspringens von Schritt a), wenn die besagte spezifische Aktion eine weitere für eine Positionskategorie, welche die besagte erste Position einschließt, verfügbare Aktion betrifft.

12. Verfahren nach Anspruch 10, weiterhin umfassend den Schritt e) des Änderns der Funktionsweise der besagten Endbenutzervorrichtung von einer ersten Funktionsweise, welche auf dem Multimedia-Inhalt an der besagten ersten Position verfügbaren Aktionen entsprechen, in eine zweite Funktionsweise, welche einer neuen Position entspricht, wenn die besagte neue Position einer anderen Kategorie angehört als die besagte erste Position.

## Revendications

1. Dispositif de commande (10) permettant à un utilisateur de commander un dispositif d'utilisateur final équipé d'un affichage (50) dans le but d'accéder à un contenu multimédia interactif, le dispositif de commande (10) comprenant :
- un élément de commande de navigation (20) pour activer un menu de navigation (40) par l'intermédiaire dudit dispositif d'utilisateur final, le menu de navigation énumérant des emplacements avec un contenu interactif à la disposition dudit dispositif d'utilisateur final ;
- un élément de commande d'exécution (30) pour activer un menu d'exécution (140) par l'intermédiaire dudit dispositif d'utilisateur final, le menu d'exécution énumérant des actions à la disposition de l'utilisateur pour un emplacement spécifique auquel ledit utilisateur est en train d'accéder ; et
- des moyens permettant audit utilisateur de sélectionner ledit emplacement spécifique dans ledit menu de navigation, et de sélectionner une action dans ledit menu d'exécution,
**caractérisé en ce que** ledit élément de commande d'exécution (30) est dédié à l'activation dudit menu d'exécution (140) et distinct dudit élément de commande de navigation (20), et **en ce que** ledit menu de navigation (40) peut être activé lorsque ledit menu d'exécution (140) est désactivé et inversement.

2. Dispositif de commande selon la revendication 1 dans lequel ledit menu d'exécution (140) peut être vu par l'utilisateur seulement après que ledit élément de commande d'exécution (30) est activé.

3. Dispositif de commande selon la revendication 1 ou la revendication 2 dans lequel ledit menu de navigation (40) peut être vu par l'utilisateur seulement après que ledit élément de commande de navigation (20) est activé.

4. Dispositif de commande selon l'une quelconque des revendications 1 à 3 dans lequel ledit dispositif d'utilisateur final est un boîtier décodeur.

5. Dispositif de commande selon l'une quelconque des revendications 1 à 4 dans lequel ledit menu de navigation (40) regroupe des emplacements sur des sous-menus sur la base de catégories multimédia.

6. Dispositif de commande selon la revendication 5 dans lequel ledit menu de navigation (40) comprend des sous-menus pour une catégorie de télévision (70), une catégorie de télévision améliorée (80), une catégorie d'accès au Web (90), une catégorie de services (100), une catégorie de communications (110) et une catégorie Web (120).

7. Dispositif de commande selon l'une quelconque des revendications 1 à 6 dans lequel lesdits menu de navigation (40) et menu d'exécution (140) fournissent un champ d'identification (60) pour identifier l'emplacement spécifique auquel on est en train d'accéder.

8. Dispositif de commande selon l'une quelconque des revendications 1 à 7 dans lequel lesdits menu de navigation (40) et menu d'exécution (140) sont affichés à différents moments dans un coin dudit affichage (50), de manière concomitante avec le contenu multimédia disponible au niveau dudit emplacement spécifique.

9. Procédé d'accession à un contenu multimédia interactif à partir d'un dispositif d'utilisateur final au moyen d'un dispositif de commande (10), ledit dispositif d'utilisateur final pouvant être activé pour fonctionner conformément à une pluralité de modes, comprenant les étapes suivantes :
a) activer un menu de navigation (40) en utilisant un élément de commande de navigation (20) prévu sur ledit dispositif de commande, le menu de navigation énumérant des emplacements avec un contenu interactif à la disposition dudit dispositif d'utilisateur final ;
b) lors de la sélection d'un premier emplacement, activer un menu d'exécution (140) en utilisant un élément de commande d'exécution (30), le menu d'exécution énumérant des actions à la disposition de l'utilisateur pour ledit premier emplacement ; et
c) sélectionner une action spécifique à partir dudit menu d'exécution pour permettre audit utilisateur d'accéder au contenu multimédia disponible au niveau dudit premier emplacement et d'exécuter ladite action spécifique sur ledit contenu multimédia,
**caractérisé en ce que** ledit élément de commande d'exécution (30) est dédié à l'activation dudit menu d'exécution (140) et distinct dudit élément de commande de navigation (20).

10. Procédé selon la revendication 9, comprenant en outre l'organisation des emplacements fournis par ledit menu de navigation en catégories sur la base du mode de fonctionnements disponible au niveau dudit dispositif d'utilisateur final.

11. Procédé selon la revendication 10, comprenant en outre l'étape d) consistant à sauter l'étape a) dans le cas où ladite action spécifique se rapporterait à une action ultérieure disponible pour une catégorie d'emplacement comprenant ledit premier emplacement.

12. Procédé selon la revendication 10, comprenant en outre l'étape e) de changement du mode de fonctionnement dudit dispositif d'utilisateur final en passant d'un premier mode de fonctionnement correspondant à des actions disponibles sur le contenu multimédia au niveau dudit premier emplacement à un deuxième mode de fonctionnement correspondant à un nouvel emplacement, chaque fois que ledit nouvel emplacement est dans une catégorie différente de celle dudit premier emplacement.
